(19) Europäisches Patentamt
European Patent Office
Office européen des brevets

(11) **EP 3 186 321 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(21) Anmeldenummer: **15753698.8**

(22) Anmeldetag: **25.08.2015**

(51) Int Cl.:
***C09D 133/26*** *(2006.01)*

(86) Internationale Anmeldenummer:
**PCT/EP2015/069391**

(87) Internationale Veröffentlichungsnummer:
**WO 2016/030344 (03.03.2016 Gazette 2016/09)**

(54) **WÄSSRIGE BESCHICHTUNGSZUSAMMENSETZUNGEN**

AQUEOUS COATINGS

REVÊTEMENTS AQUEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2014 EP 14182263**

(43) Veröffentlichungstag der Anmeldung:
**05.07.2017 Patentblatt 2017/27**

(73) Patentinhaber: **BASF SE**
**67056 Ludwigshafen am Rhein (DE)**

(72) Erfinder:
• **FUJII-COSYNS, Audrey**
**68163 Mannheim (DE)**
• **TUCHBREITER, Arno**
**48033 Southfield (US)**
• **FISCHER, Frank**
**67281 Kirchheim (DE)**
• **NGUYEN-KIM, Son**
**69502 Hemsbach (DE)**

(74) Vertreter: **BASF IP Association**
**BASF SE**
**G-FLP-C6**
**67056 Ludwigshafen (DE)**

(56) Entgegenhaltungen:
**WO-A1-2005/123014    WO-A1-2015/107163**
**DE-A1- 19 908 719    US-A1- 2003 203 991**

**Beschreibung**

Die vorliegende Erfindung betrifft wässrige Beschichtungszusammensetzungen auf Basis wässriger Polymerdispersionen, die insbesondere zur Beschichtung von Tannin-haltigen Substraten wie Holz geeignet sind und die insbesondere zu einer Verringerung von Farbveränderungen der Beschichtung, die durch Tannin hervorgerufen werden, führen.

Tannine sind wasserlösliche phenolische oder polyphenolische Verbindungen, die natürlicherweise in Hölzern vorkommen und diesen die charakteristische gelbe bis braune Eigenfarbe verleihen. Durch Wasser gelöste Tannine können an die Holzoberfläche migrieren und auch bei beschichteten Hölzern zu unschönen Verfärbungen führen. Insbesondere nach starken Regenfällen treten daher bei hellen Holzanstrichen plötzlich braune Ausläufer und gelbe Astmarkierungen auf, die das Erscheinungsbild der beschichteten Hölzer ästhetisch negativ beeinflussen. Das Phänomen des Farbdurchschlags kann nicht nur unter feuchten Bedingungen, wie Regenfällen, stattfinden, sondern auch schon während der Applizierung von auf Wasser basierten Beschichtungsformulierungen.

Es ist grundsätzlich bekannt, dass durch Zusatz bestimmter Additive zu konventionellen Beschichtungszusammensetzungen eine Tanninsperrwirkung erzielt werden kann, d. h. die erhaltenen Beschichtungen weisen eine signifikante Verringerung der durch Tannin verursachten Farbausläufer und Farbdurchschläge auf. Die Wirkweise dieser Additive basiert im Wesentlichen darauf, dass sie die wasserlöslichen Holzinhaltsstoffe fixieren. So werden verschiedentlich Zinkoxid-haltige Beschichtungszusammensetzungen vorgeschlagen. Die Erfahrung zeigt jedoch, dass zwischen den einzelnen Beschichtungen lange Trockenzeiten von in der Regel zwischen 24 Stunden und 36 Stunden einzuhalten sind, damit kein Wiederanlösen und Mobilisieren der Holzinhaltsstoffe möglich ist. Trotzdem sind diese Systeme nicht hundertprozentig sicher, insbesondere bei pigmenthaltigen Beschichtungsformulierungen. Insbesondere das Ausbilden von Farbdurchschlägen kann mit diesen Beschichtungszusammensetzungen nicht generell verhindert werden.

Die DE-A 19908719 beschreibt Beschichtungszusammensetzungen für Hölzer auf Basis wässriger Acrylatdispersionen, die zur Vermeidung von Farbausläufern und Farbdurchschlägen ein wasserlösliches Amin-haltiges Polymer, insbesondere Polyethylenimin, enthalten. Man nimmt an, dass die Amin-haltigen Polymere die wasserlöslichen Holzinhaltsstoffe in den Holzporen fixieren und so ein Ausbluten und dadurch bedingte Verfärbungen verringern. Andererseits erweisen sich die erhaltenen Beschichtungen als nur bedingt witterungsbeständig, da sie bei Einwirkung von Licht, insbesondere Sonnenlicht, zur Vergilbung neigen.

Die DE 10 2011 079 112 beschreibt wässrige Beschichtungszusammensetzungen, die neben einem dispersen Bindemittelpolymeren hochverzweigte Melamin-Polymere oder Melamin-Harnstoff-Polymere als Additiv zur Verringerung von Tannin-bedingten Verfärbungen enthalten. Diese Polymere sind vergleichsweise aufwändig herzustellen und daher teuer und nicht in großem Maßstab kommerziell verfügbar. Weitere relevante Dokumente sind US 2003203991, DE 19908719 und WO 2015107163.

Der vorliegenden Erfindung liegt daher die Aufgabe zugrunde, Additive für wässrige Beschichtungsmittelzusammensetzungen zur Verfügung zu stellen, die wässrigen Beschichtungszusammensetzungen eine verbesserte Tanninsperrwirkung verleihen. Zudem sollten sie die Nachteile des Standes der Technik nicht oder nur in geringem Maße aufweisen, d. h. einfach verarbeitbar sein sowie die Stabilität der Beschichtungszusammensetzungen und die mechanische Stabilität der Beschichtungen nicht oder nicht in nennenswerter Weise beinträchtigen. Die Additive sollten insbesondere auch bei pigmenthaltigen Beschichtungen wirken, da die Pigmente das Eindringen von Wasser in die Beschichtungen erleichtern und daher grundsätzlich ein Ausbluten der Holzinhaltsstoffe fördern.

Es wurde überraschenderweise gefunden, dass aus ethylenisch ungesättigten Monomeren aufgebaute, wasserlösliche oder wasserdispergierbare Polymere, die wenigstens 30 Gew.-%, bezogen auf die Gesamtmenge der das Polymer P2 konstituierenden Monomere M, N-Vinylpyrrolidon einpolymerisiert enthalten, wässrigen pigmenthaltigen Beschichtungszusammensetzungen eine gute Tanninsperrwirkung verleihen und somit unerwünschte Verfärbungen auf beschichteten Tannin-haltigen Substraten wie Holz stark verringern. Zudem sind diese Polymere kommerziell in großem Maßstab verfügbar und beeinträchtigen die Stabilität der Beschichtungszusammensetzungen, deren Verarbeitbarkeit wie auch die mechanische Stabilität der daraus erhaltenen Beschichtungen nicht oder nicht in nennenswerter Weise.

Daher betrifft die Erfindung wässrige pigmenthaltige Beschichtungszusammensetzungen, die die folgenden Bestandteile enthalten:

a) wenigstens ein Polymer P1 in Form einer wässrigen Polymerdispersion und
b) wenigstens ein wasserlösliches Polymer P2, das aus ethylenisch ungesättigten Monomeren M aufgebaut ist und das wenigstens 30 Gew.-%, insbesondere wenigstens 35 Gew.-%, und insbesondere wenigstens 40 Gew.-%, bezogen auf die Gesamtmenge der Monomere M, N-Vinylpyrrolidon einpolymerisiert enthält, wobei das wasserlösliche Polymer P2 ausgewählt ist unter Copolymeren, die in einpolymerisierter Form

A) 30 bis 90 Gew.-% N-Vinylpyrrolidon als Monomer A,

B) 10 bis 70 Gew.-% wenigstens eines neutralen monoethylenisch ungesättigten Monomers als Monomer B und gegebenenfalls

C) 0 bis 20 Gew.-% eines kationischen Monomers als Monomer C

umfassen, wobei die Angaben in Gew.-% auf die Gesamtmasse der Monomere M bezogen sind und die Monomere A und B wenigstens 80 Gew.-%, bezogen auf die Gesamtmasse der Monomere M ausmachen,
wobei die Monomere B ausgewählt sind unter

b1) Vinylestern gesättigter $C_2$-$C_{12}$-Monocarbonsäuren,
b2) primären Amiden monoethylenisch ungesättigter $C_3$-$C_6$-Monocarbonsäuren,
b3) N-Vinyllactamen mit 7 bis 10 C-Atomen,
b4) Vinyl-substituierten Stickstoff-Heteroaromaten,
b5) N-$C_1$-$C_4$-Alkylamiden und N,N-Di-$C_1$-$C_4$-alkylamiden monoethylenisch ungesättigter $C_3$-$C_6$-Monocarbonsäuren,
b6) N-Vinylamiden gesättigter $C_1$-$C_6$-Monocarbonsäuren,

und deren Gemischen,
wobei das wasserlösliche Polymer P2 in einer Menge von 0,5 bis 10 Gew.-%, bezogen auf das Polymer P1 enthalten ist.

Ebenfalls Gegenstand der vorliegenden Erfindung ist die Verwendung der wässrigen Beschichtungsformulierung zur Beschichtung Tannin-haltiger Substrate, ein Verfahren zur Beschichtung von Substraten sowie die nach diesem Verfahren beschichteten Substrate.

Ein weiterer Gegenstand der vorliegenden Erfindung ist die Verwendung wasserlöslicher Polymere (Polymere P2), die aus ethylenisch ungesättigten Monomeren M aufgebaut sind und die wenigstens 30 Gew.-%, bezogen auf die Monomere M, N-Vinylpyrrolidon einpolymerisiert enthalten, zur Verbesserung der Tanninsperrwirkung von wässrigen Beschichtungszusammensetzungen, wobei das wasserlösliche Polymer ausgewählt ist unter Polymeren P2, die in einpolymerisierter Form

A) 30 bis 90 Gew.-% N-Vinylpyrrolidon als Monomer A,
B) 10 bis 70 Gew.-% wenigstens eines neutralen monoethylenisch ungesättigten Monomers als Monomer B und gegebenenfalls
C) 0 bis 20 Gew.-% eines kationischen Monomers als Monomer C

umfassen, wobei die Angaben in Gew.-% auf die Gesamtmasse der Monomere M bezogen sind und die Monomere A und B wenigstens 80 Gew.-%, bezogen auf die Gesamtmasse der Monomere M ausmachen,
wobei das wasserlösliche Polymer P2 in einer Menge von 0,5 bis 10 Gew.-%, bezogen auf das Polymer P1 enthalten ist.

Die erfindungsgemäß verwendeten wasserlöslichen Polymere P2 verleihen wässrigen pigmenthaltigen Beschichtungszusammensetzungen eine gute Tanninsperrwirkung, insbesondere beim Beschichten selber (frühe Tanninsperrwirkung). Eine gute Tanninsperrwirkung der Beschichtung bei Einwirkung von Feuchtigkeit (späte Tanninsperrwirkung) ist ebenfalls gegeben. Auf diese Weise verringern oder vermeiden die Polymere P2 somit unerwünschte Verfärbungen auf beschichteten Tannin-haltigen Substraten wie Holz, insbesondere beim Beschichtungsprozess selber, aber auch im beschichteten Zustand. Eine Vergilbungsneigung der Beschichtungen unter Lichteinwirkung wird nicht oder nur in sehr geringem Maße beobachtet. Zudem sind die Polymere P2 kommerziell in großem Maßstab verfügbar und beeinträchtigen die Stabilität der Beschichtungszusammensetzungen, deren Verarbeitbarkeit wie auch die mechanische Stabilität der daraus erhaltenen Beschichtungen nicht oder nicht in nennenswerter Weise.

Die Tanninsperrwirkung kann in einfacher Weise über die Verfärbung der Beschichtung auf einem Tannin-haltigen Substrat im Vergleich zu einer Beschichtung auf Glas bestimmt werden. Die Verfärbung kann in an sich bekannter Weise mittels Photometrie bestimmt werden.

Die erfindungsgemäß verwendeten und in den erfindungsgemäßen Beschichtungszusammensetzungen enthaltenen wasserlösliche Polymere P2 sind aus dem Stand der Technik bekannt, beispielsweise aus DE 922378, DE 963057, EP 104042, DE 19950229, EP 418721, WO 01/29100, WO 2003/092640 und WO 2005/123014 auf die hiermit Bezug genommen wird. Die Polymere P2 sind zudem kommerziell verfügbar, z. B. als Additive für Kosmetika, für die Galenik, als Dispergiermittel und als Verdicker, z. B. unter den Handelsbezeichnungen Luviquat®, z. B. Luviquat® FC, Luviquat® HM, Luviquat® MS, Luviquat® Care, Luviquat® UltraCare, Luviquat® Hold oder Luviquat® Supreme, Luviskol®, z.B. Luviskol® VA, Luvitec®, z. B. Luvitec® VA64W oder Luvitec®K30, Luviset®, z. B. Luviset® clear, Kollidon®, z. B. Kollidon® K17, K25, K30 oder K90, oder VA64, und verschiedene Collacral®-Typen, z. B. Collacral® VAL der BASF SE.

Die Polymere P2 sind typischerweise in Wasser löslich, d. h. ihre Löslichkeit in entionisiertem Wasser bei 20 °C beträgt in der Regel wenigstens 5 g/L.

Die Polymere P2 weisen in der Regel ein zahlenmittleres Molekulargewicht $M_n$ im Bereich von 5000 bis 200000 g/mol, insbesondere im Bereich von 7000 bis 150000 g/mol und speziell im Bereich von 10000 bis 100000 g/mol auf. Das gewichtsmittlere Molekulargewicht $M_w$ beträgt in der Regel 5500 bis 500000 g/mol, insbesondere 10000 bis 400000 g/mol und speziell 15000 bis 250000 g/mol. Die Polydispersität (PD = Quotient aus $M_w$ und $M_n$) beträgt vorzugsweise wenigstens 1,1, besonders bevorzugt wenigstens 1,5.

Die Polymere P2 sind in der Regel unvernetzt und weisen vorzugsweise eine im Wesentlichen lineare Struktur auf mit im Mittel weniger als 10 % Verzweigungsstellen, bezogen auf die einpolymerisierten Monomereinheiten.

Die im Rahmen der vorliegenden Erfindung gemachten Angaben zu Molekulargewichten ($M_n$, $M_w$) und der Polydispersität beziehen sich auf Werte, die sich mit Gelpermeationschromatographie (GPC) in Hexafluorisopropanol oder Tetrahydrofuran als Lösungsmittel mit PMMA-Kalibrierung ergeben.

Als Maß für das Molekulargewicht kann auch der K-Wert herangezogen werden, der typischerweise im Bereich von 10 bis 100, insbesondere im Bereich von 15 bis 80 und speziell im Bereich von 20 bis 60 liegt. Der K-Wert nach Fikentscher kann mittels Kapillarviskosimetrie verdünnter, wässriger Lösungen, z. B. 1 gew.-%iger Lösungen des Polymeren P2 bestimmt werden und wird üblicherweise bei kommerziell verfügbaren Polymeren P2 angegeben. Der K-Wert kann in Analogie zu der von Fikentscher, Cellulosechemie, Bd. 13 (1932), S. 58-64 oder nach der in DIN EN ISO 1628-1:2012 bestimmt werden.

Die Polymere P2 sind in der Regel neutral oder kationisch und weisen insbesondere keine Säuregruppen auf. In bevorzugten Ausführungsformen sind die Polymere P2 neutral.

Es handelt sich bei den Polymeren P2 um Copolymere, die neben N-Vinylpyrrolidon noch ein oder mehrere neutrale oder kationische, monoethylenisch ungesättigte Monomere einpolymerisiert enthalten. Der Anteil an N-Vinylpyrrolidon, bezogen auf die Gesamtmenge der Monomere M liegt im Bereich von 30 bis 90 Gew.-%, insbesondere 35 bis 85 Gew-% und speziell 40 bis 80 Gew.-%.

Polymere P2 sind solche Copolymere, die in einpolymerisierter Form die folgenden Monomere umfassen oder daraus bestehen:

a) 30 bis 90 Gew.-%, insbesondere 35 bis 85 Gew-% und speziell 40 bis 80 Gew.-% N-Vinylpyrrolidon als Monomer A,
b) 10 bis 70 Gew.-%, insbesondere 15 bis 65 Gew.-% und speziell 20 bis 60 Gew.-% wenigstens eines neutralen monoethylenisch ungesättigten Monomers als Monomer B und gegebenenfalls
c) 0 bis 20 Gew.-%, insbesondere 0 bis 15 Gew.-% gegebenenfalls eines kationischen Monomers als Monomer C, z. B. 0,1 bis 20 Gew.-% oder 0,5 bis 15 Gew.-%;

wobei die Angaben in Gew.-% auf die Gesamtmasse der Monomere M bezogen sind und die Monomere A und B wenigstens 80 Gew.-%, insbesondere 85 Gew.-%, bezogen auf die Gesamtmasse der Monomere M ausmachen. Insbesondere beträgt die Gesamtmenge der Monomere A), B) und C) wenigstens 99 Gew.-%, bezogen auf die Gesamtmenge der Monomere M.

Beispiele für geeignete Monomere B sind

b1) Vinylester gesättigter $C_2$-$C_{12}$-Monocarbonsäuren, wie Vinylacetat, Vinylpropionat, Vinylhexanoat und Vinyloctanoat sowie Vinylester verzweigter aliphatischer Monocarbonsäuren mit 6 bis 12 C-Atomen, nämlich Vinylester sogenannter Versatic®-Säuren, die als VeoVa®X Monomere (X steht für die Anzahl der Kohlenstoffatome) von der Fa. Monomentive vertrieben werden;
b2) primäre Amide monoethylenisch ungesättigter $C_3$-$C_6$-Monocarbonsäuren, insbesondere Acrylamid oder Methacrylamid;
b3) N-Vinyllactame mit 7 bis 10 C-Atomen, z. B. N-Vinylpiperidin-2-on oder N-Vinylcaprolactam;
b4) Vinyl-substituierte Stickstoff-Heteroaromaten, wie 2-, 3- oder 4-Vinylpyridin, 1-Vinylimidazol, 2-Methyl-1-vinylimidazol und 4-Methyl-1-vinylimidazol;
b5) N-$C_1$-$C_4$-Alkylamide und N,N-Di-$C_1$-$C_4$-alkylamide monoethylenisch ungesättigter $C_3$-$C_6$-Monocarbonsäuren wie N-Methylacrylamid, N-Ethylacrylamid, N,N-Dimethylacrylamid, N-Methylacrylamid, N-Ethylacrylamid, N,N-Dimethylacrylamid, und tert-Butylacrylamid;
b6) N-Vinylamide gesättigter $C_1$-$C_6$-Monocarbonsäuren, wie N-Vinylformamid, N-Vinylacetamid oder N-Vinylpropionamid;
b7) $C_1$-$C_3$-Alkylacrylate, wie Methylacrylat, Ethylacrylat, n-Propylacrylat, sowie Methylmethacrylat;

und deren Gemische.

Bevorzugte Monomere B sind aus den Gruppen b1), b2), b3) und b6) ausgewählt.

Bevorzugte neutrale Monomere B sind vor allem solche, die bei 20°C eine Wasserlöslichkeit von wenigstens 10 g/L, insbesondere wenigstens 20 g/L aufweisen. Hierzu zählen vor allem:

b1') Vinylester gesättigter $C_2$-$C_4$-Monocarbonsäuren, wie Vinylacetat und Vinylpropionat;

b2') primäre Amide monoethylenisch ungesättigter $C_3$-$C_6$-Monocarbonsäuren, insbesondere Acrylamid oder Methacrylamid;

b3') N-Vinyllactame mit 7 oder 8 C-Atomen, z. B. N-Vinylpiperidin-2-on oder N-Vinylcaprolactam;

b4') 1-Vinylimidazol, 2-Methyl-1-vinylimidazol und 4-Methyl-1-vinylimidazol;

b5') N-$C_1$-$C_4$-Alkylamide und N,N-Di-$C_1$-$C_4$-alkylamide monoethylenisch ungesättigter $C_3$-$C_6$-Monocarbonsäuren wie N-Methylacrylamid, N-Ethylacrylamid, N,N-Dimethylacrylamid, N-Methylacrylamid, N-Ethylacrylamid, N,N-Dimethylacrylamid, und tert-Butylacrylamid;

b6') N-Vinylamide gesättigter $C_1$-$C_3$-Monocarbonsäuren, wie N-Vinylformamid, N-Vinylacetamid oder N-Vinylpropionamid;

b7') $C_1$-$C_3$-Alkylacrylate, wie Methylacrylat, Ethylacrylat, n-Propylacrylat, sowie Methylmethacrylat.

Die Monomere B können in geringer Menge auch monoethylenisch ungesättigte Monomere mit einer Wasserlöslichkeit unterhalb 10 g/L enthalten. Der Anteil dieser Monomere wird jedoch regelmäßig 10 Gew.-%, bezogen auf die Gesamtmenge der das Polymer P2 konstituierenden Monomere, nicht überschreiten. Beispiele für geeignete Monomere mit geringer Wasserlöslichkeit sind vor allem Vinylester verzweigter aliphatischer Monocarbonsäuren mit 6 bis 12 C-Atomen.

Beispiele für geeignete kationische Monomere sind

c1) Diallylamonium-Salze, insbesondere Diallylammoniumchlorid,

c2) 3-($C_1$-$C_4$-Alkyl)-1-vinylimidazolinium-Salze, insbesondere 3-Methyl-1-vinylimidazolinium-Salze, z. B. die Chloride, Methosulfate und Sulfate;

c3) Tri-($C_1$-$C_4$-alkyl)ammonium-$C_2$-$C_4$-alkylester der Acrylsäure und der Methacrylsäure, vor allem die Chloride, Methosulfate und Sulfate;

c4) Tri-($C_1$-$C_4$-alkyl)ammonium-$C_2$-$C_4$-alkylamide der Acrylsäure und der Methacrylsäure, vor allem die Chloride, Methosulfate und Sulfate.

Bevorzugte Monomere C sind die Monomere der Gruppe c2).

Beispiele für geeignete Copolymere des N-Vinylpyrrolidons sind insbesondere die folgenden Co-, Ter- und Quaterpolymere:

P2a Copolymere des N-Vinylpyrrolidons mit N-Vinylacetat, insbesondere solche aus 40 bis 80 Gew.-% N-Vinylpyrrolidon und 20 bis 60 Gew.-% N-Vinylacetat,

P2b Copolymere des N-Vinylpyrrolidons mit Methacrylamid, insbesondere solche aus 40 bis 80 Gew.-% N-Vinylpyrrolidon und 20 bis 60 Gew.-% Methacrylamid,

P2c Terpolymere des N-Vinylpyrrolidons mit Methacrylamid und N-Vinylcaprolactam, insbesondere solche aus 40 bis 79 Gew.-% N-Vinylpyrrolidon und 20 bis 50 Gew.-% Methacrylamid und 1 bis 40 Gew.-% N-Vinylcaprolactam;

P2d Terpolymere des N-Vinylpyrrolidons mit N-Vinylacetat und VeoVa®9, insbesondere solche aus 40 bis 79 Gew.-% N-Vinylpyrrolidon und 10 bis 50 Gew.-% N-Vinylacetat und 1 bis 10 Gew.-% VeoVa®9;

P2e Terpolymere des N-Vinylpyrrolidons mit Methacrylamid und N-Vinylimidazol, insbesondere solche aus 40 bis 79,5 Gew.-% N-Vinylpyrrolidon und 20 bis 50 Gew.-% Methacrylamid und 0,5 bis 15 Gew.-% N-Vinylimidazol,

P2f Terpolymere des N-Vinylpyrrolidons mit N-Vinylcaprolactam und N-Vinylimidazol, insbesondere solche aus 35 bis 89,5 Gew.-% N-Vinylpyrrolidon und 10 bis 60 Gew.-% N-Vinylcaprolactam und 0,5 bis 15 Gew.-% N-Vinylimidazol,

P2g Terpolymere des N-Vinylpyrrolidons mit Methacrylamid und quaternisiertem N-Vinylimidazol, z. B. N-Vinyl-3-methylimidazoliumchlorid oder N-Vinyl-3-methylimidazoliummethosulfat, insbesondere solche aus 40 bis 89 Gew.-% N-Vinylpyrrolidon, 10 bis 40 Gew.-% Methacrylamid und 0,5 bis 15 Gew.-% quaternisiertem N-Vinylimidazol,

P2h Terpolymere des N-Vinylpyrrolidons mit N-Vinylcaprolactam und quaternisiertem N-Vinylimidazol, z. B. N-Vinyl-3-methylimidazoliumchlorid oder N-Vinyl-3-methylimidazoliummethosulfat, insbesondere solche aus 35 bis 89 Gew.-% N-Vinylpyrrolidon, 10 bis 60 Gew.-% N-Vinylcaprolactam und 0,5 bis 15 Gew.-% quaternisiertem N-Vinylimidazol,

P2i Quaterpolymere des N-Vinylpyrrolidons mit Methacrylamid, N-Vinylimidazol und quaternisiertem N-Vinylimidazol, z. B. N-Vinyl-3-methylimidazoliumchlorid oder N-Vinyl-3-methylimidazoliummethosulfat, insbesondere solche aus 50 bis 89 Gew.-% N-Vinylpyrrolidon, 10 bis 40 Gew.-% Methacrylamid, 0,5 bis 10 Gew.-% N-Vinylimidazol und 0,5 bis 10 Gew.-% quaternisiertem N-Vinylimidazol,

P2k Quaterpolymere des N-Vinylpyrrolidons mit N-Vinylcaprolactam, N-Vinylimidazol und quaternisiertem N-Vinylimidazol, z. B. N-Vinyl-3-methylimidazoliumchlorid oder N-Vinyl-3-methylimidazoliummethosulfat, insbesondere solche aus 40 bis 89 Gew.-% N-Vinylpyrrolidon, 10 bis 55 Gew.-% N-Vinylcaprolactam, 0,5 bis 10 Gew.-% N-Vinylimidazol und 0,5 bis 10 Gew.-% quaternisiertem N-Vinylimidazol,

und deren Mischungen.

Besonders bevorzugt sind die Copolymertypen P2a, P2h und P2i.

Die erfindungsgemäßen Polymere P2 werden in einer Menge von 0,5 bis 10 Gew.-%, insbesondere in einer Menge von 1 bis 5 Gew.-%, bezogen auf das Polymer P1 eingesetzt.

Die erfindungsgemäßen wässrigen Beschichtungszusammensetzungen enthalten weiterhin ein für diese Anwendungen übliches Bindemittelpolymer, das hier und im Folgenden auch als Polymer P1 bezeichnet wird. Die Polymere P1 sind in Wasser unlöslich und liegen in den wässrigen Beschichtungszusammensetzungen in Form disperser Polymerpartikel vor.

Der mittlere Durchmesser der in wässriger Dispersion vorliegenden Polymere P1 (Polymerisatteilchen) liegt in der Regel im Bereich von 10 bis 1000 nm, häufig im Bereich von 20 bis 500 nm oder insbesondere im Bereich von 40 bis 300 nm oder im Bereich von 50 bis 200 nm. Unter dem mittlerem Teilchendurchmesser wird in dieser Schrift der nach der Methode der Analytischen Ultrazentrifuge ermittelte gewichtsmittlere $D_{w50}$-Wert verstanden (vgl. hierzu S. E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

In der Regel werden in den erfindungsgemäßen Beschichtungszusammensetzungen solche Polymere eingesetzt, deren Glasübergangstemperatur $\geq$ -50 und $\leq$ 100 °C, insbesondere $\geq$ -30 und $\leq$ 60 °C und vorteilhaft $\geq$ 0 und $\leq$ 50 °C beträgt. Die Glasübergangstemperatur wird nach dem DSC-Verfahren (Differential Scanning Calorimetry, 20 K/min, midpoint-Messung) nach DIN 53765:1994-03 oder ISO 11357-2 bestimmt, wobei die Probenvorbereitung vorzugsweise nach DIN EN ISO 16805:2005 erfolgt.

Nach Fox (T. G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/Tg = x_1/Tg_1 + x_2/Tg_2 + .... x_n/Tg_n,$$

wobei $x_1$, $x_2$, .... $x_n$ die Massenbrüche der Monomeren 1, 2, .... n und $Tg_1$, $Tg_2$, .... $Tg_n$ die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z. B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z. B. J. Brandrup, E. H. Immergut, Polymer Handbook, 1st Ed., J. Wiley, New York, 1966; 2nd Ed. J. Wiley, New York, 1975 und 3rd Ed. J. Wiley, New York, 1989.

Bei der wässrigen Dispersion des Polymeren P1 handelt es sich in der Regel um ein Emulsionspolymerisat. Emulsionspolymerisate sind dem Fachmann geläufig und werden beispielsweise in Form einer wässrigen Polymerisatdispersion durch radikalisch initiierte wässrige Emulsionspolymerisation von ethylenisch ungesättigten Monomeren hergestellt. Diese Methode ist vielfach vorbeschrieben und dem Fachmann daher hinreichend bekannt [vgl. z. B. Encyclopedia of Polymer Science and Engineering, Vol. 8, Seiten 659 bis 677, John Wiley & Sons, Inc., 1987; D. C. Blackley, Emulsion Polymerisation, Seiten 155 bis 465, Applied Science Publishers, Ltd., Essex, 1975; D. C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Die radikalisch initiierte wässrige Emulsionspolymerisation erfolgt üblicherweise dergestalt, dass man die ethylenisch ungesättigten Monomeren, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten ethylenisch ungesättigten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise bakterizide, schaum- oder viskositätsmodifizierende Additive zugesetzt.

Neben diesen sogenannten primären wässrigen Polymerisatdispersionen kennt der Fachmann auch noch sogenannte sekundäre wässrige Polymerisatdispersionen. Unter diesen werden solche wässrigen Polymerisatdispersionen verstanden, bei deren Herstellung das Polymerisat außerhalb des wässrigen Dispergiermediums erzeugt wird, beispielsweise in Lösung eines geeigneten nichtwässrigen Lösungsmittels befindlich. Diese Lösung wird anschließend in das wässrige Dispergiermedium überführt und unter Dispergierung das Lösungsmittel, in der Regel destillativ, abgetrennt.

Erfindungsgemäß vorteilhaft lassen sich insbesondere solche in wässriger Dispersion vorliegende Polymerisate P1 einsetzen, die aufgebaut sind aus:

i) 90 bis 99,9 Gew.-%, insbesondere 95 bis 99,5 Gew.-%, wenigstens eines Monomers M1, das bei 20 °C und 1 bar eine Wasserlöslichkeit von maximal 40 g/L aufweist;

ii) 0,1 bis 10 Gew.-%, insbesondere 0,5 bis 5 Gew.-%, wenigstens eines Monomers M2, das bei 20 °C und 1 bar eine Wasserlöslichkeit von mindestens 50 g/L aufweist.

Beispiele für Monomere M1 sind

- Ester der Acryl- und/oder Methacrylsäure mit 1 bis 12 C-Atome aufweisenden Alkanolen wie Methylacrylat, Methylmethacrylat, Ethylacrylat, n-Butylacrylat, n-Butylmethacrylat, n-Hexylacrylat, Octylacrylat, 2-Ethylhexylacrylat und 2-Propylheptylacrylat;
- vinylaromatische Kohlenwasserstoffe wie Styrol;
- Butadien;
- Olefine und Halogenolefine wie Ethylen, Propen, Vinylchlorid und Vinylidenchlorid;
- Vinylester gesättigter $C_2$-$C_{12}$-Monocarbonsäuren wie Vinylacetat, Vinylpropionat, Vinylhexanoat, Vinyloctanoat und Vinylester der Versaticsäuren,

und deren Mischungen.

Bevorzugte Monomere M1 sind

- Ester der Acryl- und/oder Methacrylsäure mit 1 bis 12 C-Atome aufweisenden Alkanolen wie Methylacrylat, Methylmethacrylat, Ethylacrylat, n-Butylacrylat, n-Butylmethacrylat, n-Hexylacrylat, Octylacrylat, 2-Ethylhexylacrylat und 2-Propylheptylacrylat; sowie
- vinylaromatische Kohlenwasserstoffe wie Styrol;

und deren Mischungen.

Besonders bevorzugte Monomere M1 sind

- Ester der Acryl- und/oder Methacrylsäure mit 1 bis 12 C-Atome aufweisenden Alkanolen wie Methylacrylat, Methylmethacrylat, Ethylacrylat, n-Butylacrylat, n-Butylmethacrylat, n-Hexylacrylat, Octylacrylat, 2-Ethylhexylacrylat und 2-Propylheptylacrylat und deren Mischungen.

Beispiele für Monomere M2 sind

- monoethylenisch ungesättigte Monocarbonsäuren mit 3 bis 8 C-Atomen wie Acrylsäure und Methacrylsäure;
- primäre Amide monoethylenisch ungesättigter Monocarbonsäuren mit 3 bis 8 C-Atomen wie Acrylamid und Methacrylamid;
- Harnstoff- oder Ketogruppen tragende, monoethylenisch ungesättigte Monomere wie (Meth)acrylsäure-[2-(2-oxo-imidazolidin-1-yl)-ethylester, 2-Ureido(meth)acrylat, N-[2-(2-oxo-oxazolidin-3-yl)-ethyl]-methacrylat, Acetoacetoxyethylacrylat, Acetoacetoxypropylmethacrylat, Acetoacetoxybutylmethacrylat, 2-(Acetoacetoxy)ethylmethacrylat, Diacetonacrylamid (DAAM) und Diacetonmethacrylamid;
- Ethylenisch ungesättigte Sulfonsäuren und deren Salze wie Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren und 2-Acrylamido-2-methylpropan-sulfonsäure, insbesondere deren Salze, speziell deren Natriumsalze;
- Hydroxyalkyl(meth)acrylate, insbesondere 2-Hydroxyethyl(meth)acrylat, 3-Hy-droxypropyl-(meth)acrylat, 4-Hydroxybutyl(meth)acrylat, etc.

Erfindungsgemäß vorteilhaft lassen sich insbesondere solche in wässriger Dispersion vorliegende Polymerisate P1 einsetzen, die in einpolymerisierter Form enthalten:

| 90 bis 99,9 Gew.-% | eines oder mehrerer Monomere M1a, ausgewählt unter Estern der Acryl- und/oder Methacrylsäure mit 1 bis 12 C-Atome aufweisenden Alkanolen und Styrol und deren Mischungen, oder |
|---|---|

(fortgesetzt)

| 90 bis 99,9 Gew.-% | eines oder mehrerer Monomere M1b, ausgewählt unter Mischungen von Styrol mit Butadien und gegebenenfalls mit Estern der Acryl- und/oder Methacrylsäure mit 1 bis 12 C-Atome aufweisenden Alkanolen, oder |
|---|---|
| 90 bis 99,9 Gew.-% | eines oder mehrerer Monomere M1c, ausgewählt unter Vinylchlorid und/oder Vinylidenchlorid und gegebenenfalls mit Estern der Acryl- und/oder Methacrylsäure mit 1 bis 12 C-Atome aufweisenden Alkanolen und deren Mischungen, oder |
| 90 bis 99,9 Gew.-% | eines oder mehrerer Monomere M1d, ausgewählt unter Vinylacetat, Vinylpropionat, Vinylester der Versaticsäure, Vinylester langkettiger Fettsäuren, deren Mischungen mit Ethylen und/oder mit Estern der Acryl- und/oder Methacrylsäure mit 1 bis 12 C-Atome aufweisenden Alkanolen; |

und

| 0,1 bis 10 Gew.-% | eines oder mehrerer Monomere M2, die insbesondere ausgewählt sind unter monoethylenisch ungesättigten Monocarbonsäuren mit 3 bis 8 C-Atomen wie Acrylsäure und Methacrylsäure und deren Amiden wie Acrylamid oder Methacrylamid. |
|---|---|

Besonders bevorzugt sind solche Polymerisate P1, die aufgebaut sind aus:

| 90 bis 99,9 Gew.-% | eines oder mehrerer Monomere M1a, ausgewählt unter Estern der Acryl- und/oder Methacrylsäure mit 1 bis 12 C-Atome aufweisenden Alkanolen und Styrol, und deren Mischungen, insbesondere unter Estern der Acryl- und/oder Methacrylsäure mit 1 bis 12 C-Atome aufweisenden Alkanolen und deren Mischungen, und |
|---|---|
| 0,1 bis 10 Gew.-% | eines oder mehrerer Monomere M2, die insbesondere ausgewählt sind unter monoethylenisch ungesättigten Monocarbonsäuren mit 3 bis 8 C-Atomen wie Acrylsäure und Methacrylsäure und deren Amiden wie Acrylamid oder Methacrylamid. |

Die Herstellung der wässrigen Polymerdispersion der Polymere P1 erfolgt vorzugsweise durch radikalische wässrige Emulsionspolymerisation. Bei der Emulsionspolymerisation werden ethylenisch ungesättigte Verbindungen (Monomere) in Wasser polymerisiert, wobei üblicherweise oberflächenaktive Substanzen wie ionische und/oder nichtionische Emulgatoren und/oder Schutzkolloide bzw. Stabilisatoren zur Stabilisierung der Monomertröpfchen und der später aus den Monomeren gebildeten Polymerteilchen verwendet werden. Vorzugsweise wird insgesamt 0,1 bis 2,5 Gew.-% oder 0,2 bis 2,0 Gew.-%, insbesondere 0,3 bis 1,5 Gew.-%, bezogen auf den Feststoffgehalt der Polymerdispersion, an oberflächenaktiven Substanzen eingesetzt.

Eine ausführliche Beschreibung geeigneter Schutzkolloide findet sich in Houben-Weyl, Methoden der organischen Chemie, Band XIV/1, Makromolekulare Stoffe, Georg Thieme Verlag, Stuttgart, 1961, S. 411 bis 420. Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Vorzugsweise werden als grenzflächenaktive Substanzen Emulgatoren eingesetzt, deren relative Molekulargewichte üblicherweise unterhalb derer von Schutzkolloiden liegen. Als Emulgatoren sind sowohl anionische als auch nichtionische Emulgatoren und deren Mischungen geeignet. Insbesondere hat es sich bewährt, ausschließlich anionische Emulgatoren oder eine Kombination aus wenigstens einem anionischen Emulgator und wenigstens einem nichtionischen Emulgator einzusetzen.

Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_{10}$), Ethoxylate langkettiger Alkohole (EO-Grad: 3 bis 100, Alkylrest: $C_8$-$C_{36}$) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z. B. EO/PO-Blockcopolymere. Bevorzugt werden Ethoxylate langkettiger Alkanole (Alkylrest $C_1$-$C_{30}$, mittlerer Ethoxylierungsgrad 5 bis 100) und darunter besonders bevorzugt solche mit einem linearen $C_{12}$-$C_{20}$-Alkylrest und einem mittleren Ethoxylierungsgrad von 10 bis 50 sowie ethoxylierte Monoalkylphenole, eingesetzt.

Geeignete anionische Emulgatoren sind beispielsweise Alkali- und Ammoniumsalze von Alkylsulfaten (Alkylrest: $C_8$-$C_{22}$), von Schwefelsäurehalbestern ethoxylierter Alkanole (EO-Grad: 2 bis 50, Alkylrest: $C_{12}$-$C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$-$C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine $C_4$-$C_{24}$-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

Den Polymerdispersionen können weiterhin übliche Hilfs- und Zusatzstoffe zugesetzt werden. Dazu zählen beispielsweise den pH-Wert einstellende Substanzen, Reduktions- und Bleichmittel, wie z. B. die Alkalimetallsalze der Hydroxymethansulfinsäure (z. B. Rongalit® C der BASF SE), Komplexbildner, Desodorantien, Geruchsstoffe und Viskositätsmodifizierer, wie Alkohole, z. B. Glycerin, Methanol, Ethanol, tert.-Butanol, Glykol, etc. Diese Hilfs- und Zusatzstoffe können den Polymerdispersionen in der Vorlage, einem der Zuläufe oder nach Abschluss der Polymerisation zugesetzt werden.

Die Emulsionspolymerisation kann mit wasserlöslichen Initiatoren gestartet werden. Wasserlösliche Initiatoren sind z. B. Ammonium- und Alkalimetallsalze der Peroxodischwefelsäure, z. B. Natriumperoxodisulfat, Wasserstoffperoxid oder organische Peroxide, z. B. tert-Butylhydroperoxid. Als Initiator geeignet sind auch sogenannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel, wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)-sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein, z. B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,2 bis 20 Gew.-%, besonders bevorzugt 0,3 bis 10 Gew.-%, bezogen auf die zu polymerisierenden Monomeren. Es können auch mehrere verschiedene Initiatoren bei der Emulsionspolymerisation Verwendung finden.

Die Emulsionspolymerisation kann einstufig oder mehrstufig durchgeführt werden, wobei die in den einzelnen Stufen polymerisierten Monomerzusammensetzungen in der Regel voneinander abweichen. Insbesondere weichen die Monomerzusammensetzungen hinsichtlich der theoretisch resultierenden Glasübergangstemperatur und/oder hinsichtlich der Mengenanteile der Monomere M2 ab.

Die Emulsionspolymerisation erfolgt in der Regel bei 30 bis 130 °C, vorzugsweise bei 50 bis 90 °C. Das Polymerisationsmedium kann sowohl nur aus Wasser als auch aus Mischungen aus Wasser und damit mischbaren Flüssigkeiten wie Methanol bestehen. Vorzugsweise wird nur Wasser verwendet. Die Emulsionspolymerisation der ersten Stufe kann sowohl als Batchprozess als auch in Form eines Zulaufverfahrens, einschließlich Stufen- oder Gradientenfahrweise, durchgeführt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d. h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Häufig ist es vorteilhaft, wenn die nach Abschluss der Emulsionspolymerisation erhaltene wässrige Polymerisatdispersion einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation), und/oder physikalisch, beispielsweise durch Strippung der wässrigen Polymerisatdispersion mit Wasserdampf oder Inertgas. Entsprechende chemische und/oder physikalische Methoden sind dem Fachmann geläufig [siehe beispielsweise EP-A 771 328, DE-A 196 24 299, DE-A 196 21 027, DE-A 197 41 184, DE-A 197 41 187, DE-A 198 05 122, DE-A 198 28 183, DE-A 198 39 199, DE-A 198 40 586 und 198 47 115]. Dabei bietet die Kombination aus chemischer und physikalischer Nachbehandlung den Vorteil, dass neben den nicht umgesetzten ethylenisch ungesättigten Monomeren auch noch andere störende leichtflüchtige organische Bestandteile (die sogenannten VOCs [volatile organic compounds]) aus der wässrigen Polymerisatdispersion entfernt werden.

Die erfindungsgemäßen Beschichtungszusammensetzungen enthalten wenigstens ein Pigment, insbesondere wenigstens ein Weißpigment. Daneben können die erfindungsgemäßen Beschichtungszusammensetzungen einen oder mehrere Füllstoffe, insbesondere einen oder mehrere anorganische Füllstoffe enthalten.

Der Anteil der Pigmente und Füllstoffe in Beschichtungszusammensetzungen kann in an sich bekannter Weise durch die Pigmentvolumenkonzentration (PVK) beschrieben werden. Die PVK beschreibt das Verhältnis des Volumens an Pigmenten ($V_P$) und Füllstoffen ($V_F$) zum Gesamtvolumen, bestehend aus den Volumina an Bindemittel ($V_B$), Pigmenten und Füllstoffen eines getrockneten Beschichtungsfilms in Prozent: PVK = ($V_P$ + $V_F$) x 100 / ($V_P$ + $V_F$ + $V_B$).

Die erfindungsgemäßen Wirkungen der Additive kommen insbesondere bei pigmenthaltigen Beschichtungszusammensetzungen zum Tragen, die eine PVK von wenigstens 5, insbesondere wenigstens 10 aufweisen. Vorzugsweise wird die PVK einen Wert von 50, insbesondere 40 nicht überschreiten und liegt speziell im Bereich von 15 bis 35.

Geeignete Pigmente sind beispielsweise anorganische Weißpigmente, wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, Anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Ropaque®- und AQACell®-Dispersionen. Weiterhin geeignet sind die Luconyl®-Marken der Fa. BASF SE, wie z.B. das Luconyl®-Gelb, Luconyl®-Braun und Luconyl®-Rot, insbesondere die transparenten Varianten.

Beispiele für geeignete Füllstoffe sind Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid, etc. In den erfindungsgemäßen Beschichtungsmittelzusammensetzungen werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe. Zu Füllstoffen zählen auch Mattierungsmittel, die so gewünscht den Glanz stark beeinträchtigen. Mattierungsmittel sind in der Regel transparent und können sowohl organisch als auch anorganisch sein. Beispiele für Mattierungsmittel sind anorganische Silikate, z. B. die Syloid®-Marken von W. R. Grace & Company und die Acematt®-Marken von der Fa. Evonik GmbH. Organische Mattierungsmittel sind z. B. erhältlich von der Fa. BYK-Chemie GmbH unter den Ceraflour®- und den Ceramat®-Marken, von der Fa. Deuteron GmbH unter der Deuteron MK®-Marke.

Bevorzugt sind die erfindungsgemäßen Beschichtungszusammensetzungen als Weißpigmenthaltige Beschichtungsmittelzusammensetzung ausgestaltet, d. h. sie enthalten wenigstens ein Weißpigment und gegebenenfalls einen oder mehrere Füllstoffe. Insbesondere enthalten sie als Weißpigment Titandioxid, vorzugsweise in der Rutilform, gegebenenfalls in Kombination mit einem oder mehreren Füllstoffen. Besonders bevorzugt enthalten die erfindungsgemäßen Beschichtungszusammensetzungen ein Weißpigment, insbesondere Titandioxid, vorzugsweise in der Rutilform, in Kombination mit einem oder mehreren Füllstoffen, z. B. Kreide, Talkum oder deren Gemische.

Die erfindungsgemäßen wässrigen Beschichtungszusammensetzungen (wässrige Anstrichmittel) können neben dem Polymer P1, dem Polymer P2, dem Pigment und Wasser weitere Hilfsmittel enthalten.

Zu den üblichen Hilfsmitteln zählen

- Netz- oder Dispergiermittel,
- Filmbildehilfsmittel,
- Verdicker,
- Verlaufsmittel,
- Biozide und
- Entschäumer.

Netz- oder Dispergiermittel sind z. B. Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Geeignete Filmbildehilfsmittel sind z. B. Texanol® von der Fa. Eastman Chemicals und die Glykolether und -Ester, z. B. im Handel erhältlich von BASF SE unter den Namen Solvenon® und Lusolvan®, und von Dow unter dem Handelsnamen Dowanol®. Die Menge beträgt vorzugsweise <10 Gew.-% und besonders bevorzugt < 5 Gew.-% auf die Gesamtformulierung. Es ist auch möglich, völlig ohne Lösemittel zu formulieren.

Geeignete Verdicker sind z. B. Assoziativverdicker, wie Polyurethanverdicker. Die Menge des Verdickers beträgt vorzugsweise weniger als 2,5 Gew.-%, besonders bevorzugt weniger als 1,5 Gew.-% Verdicker, bezogen auf den Feststoffgehalt des Anstrichmittels.

Weitere Formulierungshinweise für Holzanstriche sind ausführlich beschrieben in "water-based acrylates for decorative coatings" von den Autoren M. Schwartz und R. Baumstark, ISBN 3-87870-726-6.

Die Herstellung der erfindungsgemäßen Beschichtungsmittelzusammensetzungen erfolgt in an sich bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten und anschließend erst das polymere Bindemittel, d. h. in der Regel die wässrige Dispersion des Polymeren, mit der Pigmentpaste bzw. Pigmentdispersion zu vermischen.

Das erfindungsgemäße Anstrichmittel kann in üblicher Weise auf Substrate aufgebracht werden, z. B. durch Streichen, Spritzen, Tauchen, Rollen, Rakeln.

Die erfindungsgemäßen wässrigen Beschichtungsformulierungen eignen sich vorteilhaft zur Beschichtung von Substraten, insbesondere Tannin-haltige Substrate, wie insbesondere Holz.

Dabei erfolgt die Beschichtung der Substrate dergestalt, dass das Substrat zuerst mit einer erfindungsgemäßen wässrigen Beschichtungsformulierung beschichtet und daran anschließend die wässrige Beschichtung einem Trocknungsschritt, insbesondere im Temperaturbereich ≥ -10 und ≤ 50 °C, vorteilhaft ≥ 5 und ≤ 40 °C und insbesondere vorteilhaft ≥ 10 und ≤ 35 °C unterzogen wird.

Von Vorteil ist, dass die erfindungsgemäßen wässrigen Beschichtungsformulierungen, welche die Polymere P2 oder deren Mischungen enthalten, zur Vorbehandlung von Tannin-haltigen Substraten eingesetzt werden können. Dabei erfolgt die Vorbehandlung vor dem eigentlichen Farbaufstrich. Darüber hinaus können die wässrigen Beschichtungszusammensetzungen auch Farbformulierungen sein, welche neben den Polymeren P2 oder deren Mischungen noch die dem Fachmann in Art und Menge geläufigen üblichen Komponenten, wie beispielsweise Bindemittel (insbesondere in Form wässriger Polymerisatdispersionen), Verdicker, Pigmentverteiler, Dispergiermittel, Emulgatoren, Biozide, Entschäumer, Filmbildehilfsmittel, organische Lösungsmittel, Pigmente oder Füllstoffe, etc., enthalten.

Vorzugsweise wird die aufgetragene Menge an Beschichtungszusammensetzung so gewählt, dass die Menge an Polymer P2 oder deren Mischungen ≥ 0,001 und ≤ 100 g/m$^2$ Substrat beträgt. Wird dabei die wässrige Beschichtungsformulierung zur Vorbehandlung verwendet, so beträgt die auf das Substrat aufgetragene Menge an Polymer P2 oder deren Mischungen vorzugsweise ≥ 0,01 und ≤ 50 g/m$^2$ und insbesondere ≥ 0,02 und ≤ 20 g/m$^2$. Wird dagegen die wässrige Beschichtungsformulierung in Form einer Farbformulierung verwendet, so beträgt die auf das Substrat aufgetragene Menge an Polymer P2 oder deren Mischungen vorzugsweise ≥ 0,005 und ≤ 20 g/m$^2$ und insbesondere ≥ 0,01 und ≤ 10 g/m$^2$.

Die mit einer erfindungsgemäßen Beschichtungsformulierung beschichteten Tannin-haltigen Substrate weisen schon während der Applizierung und Trocknung ("frühe Tanninsperrwirkung") sowie nach der Trocknung unter Wassereinwirkung bzw. Witterungsbedingungen ("späte Tanninsperrwirkung") eine hervorragende Beständigkeit gegenüber Farbausläufern und Farbdurchschlägen auf.

Nachfolgende nicht einschränkende Beispiele sollen die Erfindung erläutern.

Beispiele

1. Analytik

Der Feststoffgehalt wurde bestimmt, indem eine definierte Menge der wässrigen Polymerisatdispersion (ca. 2 g) in einem Aluminiumtiegel mit einem Innendurchmesser von ca. 5 cm bei 120 °C in einem Trockenschrank bis zur Gewichtskonstanz getrocknet wurde (ca. 2 Stunden). Es wurden zwei separate Messungen durchgeführt. Der im Beispiel angegebene Wert stellt den Mittelwert der beiden Messergebnisse dar.

Der mittlere Teilchendurchmesser der Polymerisatteilchen wurde durch dynamische Lichtstreuung einer mit entionisiertem Wasser auf 0,005 bis 0,01 Gew.-% verdünnten wässrigen Polymerisatdispersion bei 23 °C mittels eines High Performance Particle Sizer (HPPS) der Fa. Malvern Instruments, England, ermittelt. Angegeben wird der mittlere Durchmesser der Kumulantenauswertung (cumulant $z_{average}$) der gemessenen Autokorrelationsfunktion (ISO-Norm 13321).

Die Glasübergangstemperatur wurde nach dem DSC-Verfahren (Differential Scanning Calorimetry, 20 K/min, midpoint-Messung, DIN 53765) mittels eines DSC 822-Gerätes (Serie TA 8000) der Firma Mettler-Toledo ermittelt.

2. Einsatzstoffe:

2.1. Herstellung einer wässrigen Polymerisatdispersion (Polymer P1)

In einem mit Rührer, Thermometer, Rückflusskühler und Zulaufgefäßen ausgestatteten Reaktionsgefäß wurde bei Raumtemperatur unter Stickstoffatmosphäre ein Gemisch von 2900 g entionisiertem Wasser, 24 g einer 15 gew.-%igen wässrigen Lösung von Natriumlaurylsulfat, 150 g einer 20 gew.-%igen wässrigen Lösung eines C$_{16}$C$_{18}$-Fettal-

koholpolyethoxylats, 37,2 g einer 6 gew.-%igen wässrigen Lösung von Natriumbicarbonat und 314 g des Zulaufs 1 vorgelegt.

Zulauf 1 bestand aus 1945 g entionisiertem Wasser, 140 g einer 15 gew.-%igen wässrigen Lösung von Natriumlaurylsulfat, 113 g einer 32 gew.-%igen wässrigen Lösung eines $C_{12}C_{14}$-Fettalkoholpolyethoxysulfat-Natriumsalzes (Disponil FES 77; Verkaufsprodukt der Firma Cognis), 150 g einer 20 gew.-%igen wässrigen Lösung eines $C_{16}C_{18}$-Fettalkoholpolyethoxylats, 67 g Acrylsäure, 170 g einer 50 gew.-%igen wässrigen Lösung von Acrylamid, 3060 g n-Butylacrylat und 2370 g Methylmethacrylat in homogener Emulsion.

Die Vorlage wurde unter Rühren auf 90 °C erwärmt. Anschließend wurden unter Aufrechterhaltung dieser Temperatur 32 g einer 7 gew.-%igen wässrigen Lösung von Natriumperoxodisulfat zugegeben und die erhaltene Mischung 5 Minuten gerührt. Danach wurde zeitgleich beginnend der Rest von Zulauf 1 und 185 g einer 7 gew.-%igen wässrigen Lösung von Natriumperoxodisulfat über separate Zulaufleitungen innerhalb von 3 Stunden kontinuierlich mit gleichbleibenden Mengenströmen zudosiert.

Nach Beendigung der Zuläufe wurde 15 Minuten nachpolymerisiert und dann der erhaltenen wässrigen Polymerisatdispersion 40 g einer 25 gew.-%igen wässrigen Lösung von Ammoniak zugesetzt. Nach Abkühlen auf 85 °C wurden der erhaltenen wässrigen Polymerisatdispersion zeitgleich beginnend 76 g einer 10 gew.-%igen wässrigen Lösung von tert.-Butylhydroperoxid und 101 g einer 13,1 gew.-%igen wässrigen Lösung von Acetonbisulfit (1:1-Addukt aus Aceton und Natriumbisulfit) innerhalb 1 Stunde kontinuierlich mit gleichbleibenden Mengenströmen zudosiert. Nach Beendigung der Zugaben wurden der wässrigen Polymerisatdispersion noch 80 g entionisiertes Wasser und 36 g Acticid® MBS (Verkaufsprodukt der Firma Thor Chemie GmbH) zugegeben. Daran anschließend wurde die wässrige Polymerisatdispersion auf Raumtemperatur abgekühlt und über einen 125 $\mu$m-Filter filtriert.

Die erhaltene wässrige Polymerisatdispersion wies einen Feststoffgehalt von 50,2 Gew.-% und eine Glasübergangstemperatur von 17 °C auf. Der mittlere Teilchendurchmesser betrug 115 nm.

2.2 Polymere P2

Polymer P2.1: Terpolymer aus 40 Gew.-% N-Vinylpyrrolidon, 50 Gew.-% N-Vinylcaprolactam und 10 Gew.-% N-Vinyl-3-methylimidazoliumchlorid.

Polymer P2.2: Quaterpolymer aus 55 Gew.-% N-Vinylpyrrolidon, 29 Gew.-% Methacrylamid, 10 Gew.-% N-Vinylimidazol und 6 Gew.-% N-Vinyl-3-methylimidazoliummethosulfat.

Polymer P2.3: Terpolymer aus 65 Gew.-% N-Vinylpyrrolidon, 30 Gew.-% Methacrylamid, und 5 Gew.-% N-Vinylimidazol.

Polymer P2.4: Copolymer aus 61 Gew.-% N-Vinylpyrrolidon, 39 Gew.-% Vinylacetat mit einem K-Wert, bestimmt an einer 1 gew.-%igen wässrigen Lösung von 24,9, hergestellt gemäß Beispiel 1 der EP 418721.

Polymer P2.5: Terpolymer aus 60 Gew.-% N-Vinylpyrrolidon, 37 Gew.-% Vinylacetat und 3 Gew-% VeoVA 9* mit einem K-Wert, bestimmt an einer 1 gew.-%igen wässrigen Lösung von 63, hergestellt gemäß Beispiel 1 der DE 19950229.

*Vinylester einer Versatic-Säure mit 9 C-Atomen (CAS 54423-67-5)

Polymer P2.6: Handelsübliches Homopolymer des N-Vinylpyrrolidons mit einem K-Wert von 30, z. B. Kollidon 30.

3. Herstellung der modifizierten wässrigen Polymerisatdispersionen

Die erfindungsgemäßen Zusammensetzungen wurden hergestellt, indem man das jeweilige Polymer P2 zu einer Teilmenge der unter 2.1 hergestellten wässrigen Polymerisatdispersion bei Raumtemperatur unter Rühren zugab. Die Mengen der Polymere P2 wurden dabei so bemessen, dass sie die in nachfolgender Tabelle 1 angegebenen Werte ergaben. Angegeben ist die Menge an Polymer P2 in Gewichtsteilen, bezogen auf 100 Gew.-Teile an Polymer P1 der eingesetzten wässrigen Polymerisatdispersion (fest/fest). Die entsprechende Bezeichnung der erhaltenen modifizierten wässrigen Polymerisatdispersion ist ebenfalls in Tabelle 1 angegeben.

Tabelle 1: Herstellung der mit den Polymeren P2 modifizierten wässrigen Polymerisatdispersionen

| Polymer P2: | Menge [pro 100 Gew.-Teilen Feststoff der wässrigen Polymerisatdispersion] | Bezeichnung der modifizierten wässrigen Polymerisatdispersion |
|---|---|---|
| -- | 0 | Dispersion D0 |
| P2.1 | 3,0 | Dispersion D1 |
| P2.2 | 3,0 | Dispersion D2 |
| P2.3 | 3,0 | Dispersion D3 |
| P2.4 | 3,0 | Dispersion D4 |
| P2.5 | 3,0 | Dispersion D5 |
| P2.6 | 3,0 | Dispersion D6 |

4. Herstellung einer Farbformulierung

Zur Herstellung der entsprechenden Farbformulierungen wurden bei Raumtemperatur die in nachfolgenden Tabellen 2 und 3 aufgelisteten Komponenten in der angegebenen Menge und der angegebenen Reihenfolge mittels eines Zahnscheibenrührers homogen zu Farbpasten vermischt.

Tabelle 2: Komponenten der Farbpaste F1

| Bestandteil | Gew.-Teile [g] |
|---|---|
| entionisiertes Wasser | 102,5 |
| Verdicker[1] | 8,2 |
| Pigmentverteiler[2] | 2,0 |
| Dispergiermittel[3] | 4,1 |
| Biozid[4] | 2,0 |
| Entschäumer[5] | 5,1 |
| Filmbildehilfsmittel[6] | 20,5 |
| Pigment[7] | 204,9 |
| Füllstoff[8] | 82,0 |
| Füllstoff[9] | 30,7 |
| Lösungsmittel[10] | 15,4 |
| Verdicker[11] | 4,6 |

[1] Coapur® XS 73 Firma Omya GmbH, Deutschland
[2] Pigmentverteiler® MD 20 Firma BASF SE, Deutschland
[3] 25 gew.-%ige wässrige Lösung von Natriumpolyphosphat Firma Sigma Aldrich Chemie GmbH, Deutschland
[4] Parmetol® A 26 Firma Schülke & Mayr GmbH, Deutschland
[5] Byk® 024 Firma Byk-Chemie GmbH, Deutschland
[6] Lusolvan® PP Firma BASF SE, Deutschland
[7] Titandioxid; Kronos® 2056 Firma Kronos Titan GmbH, Deutschland
[8] Calciumcarbonat; Omyacarb® 5 GU Firma Omya GmbH, Deutschland
[9] Talk; Finntalc® M 30 SL Firma Mondo Minerals, Niederlande
[10] Butyldiglykol Firma BASF SE, Deutschland
[11] Collacral® LR 8990 Firma BASF SE, Deutschland

Tabelle 3: Komponenten der Farbpaste F2

| Bestandteil | Gew.-Teile [g] |
|---|---|
| entionisiertes Wasser | 119,5 |
| Lösungsmittel[12] | 33,5 |
| Dispergiermittel[13] | 13,7 |
| Biozid[14] | 1,0 |
| Emulgator[15] | 1,5 |
| Verdicker 1 [16] | 6,4 |

(fortgesetzt)

| Bestandteil | Gew.-Teile [g] |
|---|---|
| Verdicker 2 [17] | 7,0 |
| Entschäumer[18] | 3,4 |
| Pigment[19] | 228,8 |
| Füllstoff[20] | 81,6 |
| Verdicker 3 [21] | 38,3 |
| Filmbildehilfsmittel[22] | 6,7 |

[12] Propylene Glycol Firma BASF SE, Deutschland
[13] Sokalan® CP9 Firma BASF SE, Deutschland
[14] Acticide® MBS Firma Thor, Deutschland
[15] Lutensol® XL 80 Firma BASF SE, Deutschland
[16] Collacral® LR 8990 Firma BASF SE, Deutschland
[17] Collacral® LR 8989 Firma BASF SE, Deutschland
[18] Che Coat DF 6682 Firma C. H. Erbslöh, Deutschland
[19] Tiona®595 Firma Millenium Chemicals (Lyondell Company), Belgien
[20] Omyacarb® 5 GU Firma Omya GmbH, Deutschland
[21] Natrosol plus®, 2%ig Firma Hercules, Belgien
[22] Texanol® Firma Krahn-Chemie GmbH, Deutschland

Die gemäß der vorstehend beschriebenen Vorgehensweise frisch hergestellten Farbpasten wurden durch einen 125 µm-Filter unter Anlegen eines Vakuums filtriert, um Luftblasen und größere Pigmentagglomerate zu entfernen. Daran anschließend wurden den Farbpasten F1 jeweils 438,5 g der Dispersionen sowie 79,4 g entionisiertes Wasser und den Farbpasten F2 jeweils 393,5 g der Dispersionen sowie 64,9 g entionisiertes Wasser homogen zugemischt. Die entsprechend erhaltenen Farbformulierungen wurden dann einen Tag bei Raumtemperatur in Ruhe gelagert.

5. Anwendungstechnische Untersuchungen

Die anwendungstechnischen Untersuchungen wurden mit unbehandeltem Merbau-, Zedern- und Eichenholz durchgeführt. Hierzu wurden aus den verschiedenen Hölzern Bretter mit den Maßen 150 x 50 x 5 mm verwendet, welche mit einem trockenen Baumwolltuch von anhaftendem Staub befreit wurden. Um Abweichungen zu minimieren und die Vergleichbarkeit zu gewährleisten, wurden die Prüfserien auf jeweils einem Brett durchgeführt. Dabei wurde so vorgegangen, dass auf dem jeweiligen Brett zuerst Flächen von 130 x 40 mm gleichmäßig mit 0,46 g jeweils einer der Formulierungen beschichtet und anschließend in einem Klimaraum bei 23 °C und 50 % relativer Luftfeuchtigkeit für zwei Stunden getrocknet wurden (Schicht 1). Daran anschließend wurden auf jede dieser Beschichtungen 0,32 g der jeweiligen Formulierung gleichmäßig über eine Fläche von 90 x 40 mm aufgetragen und wie bei der ersten Schicht getrocknet (Schicht 2). Danach wurden jeweils auf diese zweite Schicht 0,18 g der jeweiligen Formulierung gleichmäßig über eine Fläche von 50 x 40 mm aufgetragen (Schicht 3) und danach die entsprechend beschichteten Bretter für 24 Stunden im Klimaraum bei 23 °C und 50 % relativer Luftfeuchtigkeit gelagert. Da bei den Beschichtungen immer deckungsgleich an einer Seitenkante angefangen wurde, wiesen die jeweiligen Farbfilme eine 40 x 40 mm-Fläche auf, welche lediglich einmal beschichtet wurde (Schicht 1), eine 40 x 40 mm-Fläche auf, welche zweimal beschichtet wurde (Schicht 1 plus Schicht 2) und eine 50 x 40 mm-Fläche auf, welche dreimal beschichtet wurde (Schicht 1 plus Schicht 2 plus Schicht 3). Als Referenz wurden die jeweils entsprechenden Farbformulierungen auf fettfreie Glasplatten aufgebracht und getrocknet.

Die Messung der Verfärbungen erfolgte nach zwei unterschiedlichen Methoden. Dabei wurde mit Methode 1 das Maß an Verfärbungen bestimmt, welches aus dem Auftragen der jeweiligen wässrigen Farbformulierung und deren Trocknung resultiert (sogenannte "frühe Tanninsperre"). Mit Methode 2 wurde das Maß an Verfärbung bestimmt, welches aus dem Einfluss von Wasser auf den jeweiligen getrockneten Farbfilm resultiert (sogenannte "späte Tanninsperre").

Methode 1

Mittels eines Photospektrometers (Minolta Spectrometer CM-508i) wurden an wenigstens zwei Stellen von Schicht 3 der jeweiligen Farbfilme auf den Holzbrettern und den Glasplatten die sogenannten L-, a- und b-Werte gemessen und anschließend der jeweilige Mittelwert gebildet. Daran anschließend wurden die Unterschiede der gemittelten L-, a- und b-Werte der jeweiligen Farbfilme auf den Holzbrettern und den Glasplatten ermittelt ($\Delta L$, $\Delta a$ und $\Delta b$). Ein Maß für die jeweilige Farbabweichung stellt der $\Delta E$-Wert dar, welcher wie folgt ermittelt wurde:

$$\Delta E = \sqrt{(\Delta L)^2 + (\Delta a)^2 + (\Delta b)^2}$$

Dabei ist die Farbabweichung (und damit das "Ausbluten" des jeweiligen Holzes) umso geringer zu bewerten, je geringer der ∆E-Wert ausfällt. Das bedeutet, je niedriger der ∆E-Wert des jeweiligen Farbfilmes, desto weniger gefärbte Substanzen sind während dem Auftragen und dem Trocken der jeweiligen Farbformulierung aus dem jeweiligen Holz herausgelöst worden. Die aus den verschiedenen Messreihen erhaltenen Ergebnisse sind in Tabelle 4 aufgelistet.

Anmerkung: Der sogenannte CIE-Lab-Farbraum wird aus der Helligkeitsachse L, der Rot/Grün-Achse a und der Gelb/Blau-Achse b gebildet. Entsprechende Farbabweichungen werden durch den ∆E-Wert (wie oben definiert) angegeben.

Methode 2

Auf Schicht 3 der jeweiligen Farbfilme auf den Holzbrettern wurde jeweils ein Tropfen entionisiertes Wasser aufgebracht und die so behandelten Farbfilme für 12 Stunden im Klimaraum bei 23 °C und 50 % relativer Luftfeuchtigkeit getrocknet. Daran anschließend wurden die Stellen mit den eingetrockneten Wassertropfen nach folgender Notenskala bewertet:

Note Bewertung

| | |
|---|---|
| 0 | der vollständige Wasserring ist deutlich zu sehen und dunkelbraun gefärbt |
| 1 | der vollständige Wasserring ist deutlich zu sehen und hellbraun gefärbt |
| 2 | der äußere Wasserring ist zu sehen |
| 3 | Teile des äußeren Wasserrings sind zu sehen |
| 4 | der Wasserring ist noch erkennbar, aber nicht gefärbt |
| 5 | es ist nicht zu erkennen, wo der Wassertropfen war |

Es wurden von jedem Farbfilm wenigstens zwei Messungen durchgeführt. Die in Tabelle 3 angegebenen Werte stellen die Mittelwerte dieser Beurteilungen dar.

Tabelle 4: Ergebnisse der anwendungstechnischen Untersuchungen

| Messreihe | Modifizierte Polymerisatdispersion | Farbpaste | ∆E[1] | Note[2] |
|---|---|---|---|---|
| 1 (Merbau) | D0 | F1 | 1,318 | 2 |
| | D1 | F1 | 0,788 | 2 |
| | D2 | F1 | 0,783 | 2 |
| | D3 | F1 | 1,120 | 2 |
| | D4 | F1 | 0,680 | 3 |
| | D5 | F1 | 0,994 | 2 |
| | D6 | F1 | 0,539 | 2 |
| 2 (Zeder) | D0 | F1 | 1,058 | 2 |
| | D2 | F1 | 0,861 | 2 |
| | D3 | F1 | 0,579 | 2 |
| | D4 | F1 | 0,659 | 2 |
| | D5 | F1 | 0,573 | 2 |
| | D6 | F1 | 0,441 | 2 |
| 3 (Merbau) | D0 | F2 | 1,775 | 2 |
| | D4 | F2 | 0,801 | 3 |
| 4 (Zeder) | D0 | F2 | 2,128 | 1 |
| | D4 | F2 | 1,676 | 2 |

Die oben beschriebenen Ergebnisse haben gezeigt, dass die Zugabe von Polymeren P2 in Polymerdispersionen zu einer verbesserten Tanninsperrwirkung (besonders "frühe Tanninsperre") der resultierenden Beschichtungen führt.

**Patentansprüche**

1. Wässrige pigmenthaltige Beschichtungszusammensetzung, enthaltend

   a) wenigstens ein Polymer P1 in Form einer wässrigen Polymerdispersion und
   b) wenigstens ein wasserlösliches Polymer P2, das aus ethylenisch ungesättigten Monomeren M aufgebaut ist und das wenigstens 30 Gew.-%, bezogen auf die Gesamtmenge der Monomere M, N-Vinylpyrrolidon einpolymerisiert enthält, wobei das wasserlösliche Polymer P2 ausgewählt ist unter Copolymeren, die in einpolymerisierter Form

      A) 30 bis 90 Gew.-% N-Vinylpyrrolidon als Monomer A,
      B) 10 bis 70 Gew.-% wenigstens eines neutralen monoethylenisch ungesättigten Monomers als Monomer B und gegebenenfalls
      C) 0 bis 20 Gew.-% eines kationischen Monomers als Monomer C

   umfassen, wobei die Angaben in Gew.-% auf die Gesamtmasse der Monomere M bezogen sind und die Monomere A und B wenigstens 80 Gew.-%, bezogen auf die Gesamtmasse der Monomere M ausmachen, wobei die Monomere B ausgewählt sind unter

      b1) Vinylestern gesättigter $C_2$-$C_{12}$-Monocarbonsäuren,
      b2) primären Amiden monoethylenisch ungesättigter $C_3$-$C_6$-Monocarbonsäuren,
      b3) N-Vinyllactamen mit 7 bis 10 C-Atomen,
      b4) Vinyl-substituierten Stickstoff-Heteroaromaten,
      b5) N-$C_1$-$C_4$-Alkylamiden und N,N-Di-$C_1$-$C_4$-alkylamiden monoethylenisch ungesättigter $C_3$-$C_6$-Monocarbonsäuren,
      b6) N-Vinylamiden gesättigter $C_1$-$C_6$-Monocarbonsäuren,

   und deren Gemischen,
   wobei das wasserlösliche Polymer P2 in einer Menge von 0,5 bis 10 Gew.-%, bezogen auf das Polymer P1 enthalten ist.

2. Wässrige pigmenthaltige Beschichtungszusammensetzung nach Anspruch 1, wobei die Monomere B ausgewählt sind unter

      b1) Vinylestern gesättigter $C_2$-$C_{12}$-Monocarbonsäuren,
      b2) primären Amiden monoethylenisch ungesättigter $C_3$-$C_6$-Monocarbonsäuren,
      b3) N-Vinyllactamen mit 7 bis 10 C-Atomen,
      b6) N-Vinylamiden gesättigter $C_1$-$C_6$-Monocarbonsäuren,

   und deren Gemischen.

3. Wässrige pigmenthaltige Beschichtungszusammensetzung nach Anspruch 1 oder 2, wobei das Polymer P2 ausgewählt ist unter:

      - Copolymeren des N-Vinylpyrrolidons mit N-Vinylacetat,
      - Copolymeren des N-Vinylpyrrolidons mit Methacrylamid,
      - Terpolymeren des N-Vinylpyrrolidons mit N-Vinylacetat und VeoVa®9,
      - Terpolymeren des N-Vinylpyrrolidons mit Methacrylamid und N-Vinylcaprolactam,
      - Terpolymeren des N-Vinylpyrrolidons mit Methacrylamid und N-Vinylimidazol,
      - Terpolymeren des N-Vinylpyrrolidons mit Methacrylamid und quaternisiertem N-Vinylimidazol,
      - Terpolymeren des N-Vinylpyrrolidons mit N-Vinylcaprolactam und N-Vinylimidazol,
      - Quaterpolymeren des N-Vinylpyrrolidons mit Methacrylamid, N-Vinylimidazol und quaternisiertem N-Vinylimidazol,
      - Quaterpolymeren des N-Vinylpyrrolidons mit N-Vinylcaprolactam, N-Vinylimidazol und quaternisiertem N-Vinylimidazol,

und deren Mischungen.

**4.** Wässrige pigmenthaltige Beschichtungszusammensetzung nach einem der vorhergehenden Ansprüche, enthaltend das wasserlösliche Polymer P2 in einer Menge von 1 bis 5 Gew.-%, bezogen auf das Polymer P1.

**5.** Wässrige pigmenthaltige Beschichtungszusammensetzung nach einem der vorhergehenden Ansprüche, wobei das wasserlösliche Polymer P2 ein zahlenmittleres Molekulargewicht $M_n$ von 5000 bis 200000 g/mol, bestimmt mittels Gelpermationschromatographie (GPC) oder einen K-Wert nach Fikentscher im Bereich von 10 bis 100, bestimmt mittels Kapillarviskosimetrie verdünnter, wässriger Lösungen oder bestimmt nach DIN EN ISO 1628-1:2012, aufweist.

**6.** Wässrige pigmenthaltige Beschichtungszusammensetzung nach einem der vorhergehenden Ansprüche, wobei das Polymer P1 eine Glasübergangstemperatur Tg, bestimmt mittels DSC nach ISO 11357-2 im Bereich von -30 bis +60 °C aufweist.

**7.** Wässrige pigmenthaltige Beschichtungszusammensetzung nach einem der vorhergehenden Ansprüche, wobei das Polymer P1 aufgebaut ist aus

i) 90 bis 99,9 Gew.-% wenigstens eines Monomers M1, das bei 20 °C und 1 bar eine Wasserlöslichkeit von maximal 40 g/L aufweist;
ii) 0,1 bis 10 Gew.-% wenigstens eines Monomers M2, das bei 20 °C und 1 bar eine Wasserlöslichkeit von mindestens 50 g/L aufweist.

**8.** Wässrige pigmenthaltige Beschichtungszusammensetzung nach einem der vorhergehenden Ansprüche, in Form einer Weißpigment-haltigen Formulierung.

**9.** Verwendung einer pigmenthaltigen Beschichtungszusammensetzung gemäß einem der Ansprüche 1 bis 8 zur Beschichtung Tannin-haltiger Substrate, insbesondere von Holzoberflächen.

**10.** Verwendung wasserlöslicher Polymere, die aus ethylenisch ungesättigten Monomeren M aufgebaut sind und die wenigstens 30 Gew.-%, bezogen auf die Monomere M, N-Vinylpyrrolidon einpolymerisiert enthalten, zur Verbesserung der Tanninsperrwirkung von wässrigen Beschichtungszusammensetzungen, wobei das wasserlösliche Polymer ausgewählt ist unter Polymeren P2, die in einpolymerisierter Form

A) 30 bis 90 Gew.-% N-Vinylpyrrolidon als Monomer A,
B) 10 bis 70 Gew.-% wenigstens eines neutralen monoethylenisch ungesättigten Monomers als Monomer B und gegebenenfalls
C) 0 bis 20 Gew.-% eines kationischen Monomers als Monomer C

umfassen, wobei die Angaben in Gew.-% auf die Gesamtmasse der Monomere M bezogen sind und die Monomere A und B wenigstens 80 Gew.-%, bezogen auf die Gesamtmasse der Monomere M ausmachen,
wobei das wasserlösliche Polymer P2 in einer Menge von 0,5 bis 10 Gew.-%, bezogen auf das Polymer P1 enthalten ist.

**11.** Verwendung nach Anspruch 10, wobei die Monomere B ausgewählt sind unter

b1) Vinylestern gesättigter $C_2$-$C_{12}$-Monocarbonsäuren,
b2) primären Amiden monoethylenisch ungesättigter $C_3$-$C_6$-Monocarbonsäuren,
b3) N-Vinyllactamen mit 7 bis 10 C-Atomen,
b4) Vinyl-substituierten Stickstoff-Heteroaromaten,
b5) N-$C_1$-$C_4$-Alkylamiden und N,N-Di-$C_1$-$C_4$-alkylamiden monoethylenisch ungesättigter $C_3$-$C_6$-Monocarbonsäuren,
b6) N-Vinylamiden gesättigter $C_1$-$C_6$-Monocarbonsäuren,
b7) $C_1$-$C_3$-Alkylacrylate und Methylmethacrylat;

und deren Gemischen.

**12.** Verwendung nach Anspruch 10, wobei das Polymer P2 ausgewählt ist unter

- Copolymeren des N-Vinylpyrrolidons mit N-Vinylacetat,
- Copolymeren des N-Vinylpyrrolidons mit Methacrylamid,
- Terpolymeren des N-Vinylpyrrolidons mit N-Vinylacetat und VeoVa®9,
- Terpolymeren des N-Vinylpyrrolidons mit Methacrylamid und N-Vinylcaprolactam,
- Terpolymeren des N-Vinylpyrrolidons mit Methacrylamid und N-Vinylimidazol,
- Terpolymeren des N-Vinylpyrrolidons mit Methacrylamid und quaternisiertem N-Vinylimidazol,
- Terpolymeren des N-Vinylpyrrolidons mit N-Vinylcaprolactam und N-Vinylimidazol,
- Quaterpolymeren des N-Vinylpyrrolidons mit Methacrylamid, N-Vinylimidazol und quaternisiertem N-Vinylimidazol,
- Quaterpolymeren des N-Vinylpyrrolidons mit N-Vinylcaprolactam, N-Vinylimidazol und quaternisiertem N-Vinylimidazol,

und deren Mischungen.

**13.** Verfahren zur Beschichtung eines Tannin-haltigen Substrats, **dadurch gekennzeichnet, dass** das Substrat zuerst mit einer wässrigen Beschichtungsformulierung gemäß einem der Ansprüche 1 bis 8 beschichtet und daran anschließend die wässrige Beschichtung einem Trocknungsschritt unterzogen wird.

**14.** Verfahren nach Anspruch 13, **dadurch gekennzeichnet, dass** die Menge an Beschichtungsformulierung so gewählt wird, dass die Menge an wasserlöslichem Polymer im Bereich von 0,001 bis 100 g/m$^2$ Substrat liegt.

**15.** Beschichtetes Tannin-haltiges Substrat, erhältlich nach einem Verfahren gemäß einem der Ansprüche 13 oder 14.

**Claims**

**1.** An aqueous, pigment-containing coating composition comprising

a) at least one polymer P1 in the form of an aqueous polymer dispersion and
b) at least one water-soluble polymer P2 which is composed of ethylenically unsaturated monomers M and which comprises in copolymerized form at least 30 wt%, based on the total amount of the monomers M, of N-vinylpyrrolidone, the water-soluble polymer P2 being selected from copolymers which comprise in copolymerized form

A) 30 to 90 wt% of N-vinylpyrrolidone as monomer A,
B) 10 to 70 wt% of at least one neutral, monoethylenically unsaturated monomer as monomer B, and optionally
C) 0 to 20 wt% of a cationic monomer as monomer C,

the figures in wt% being based on the total mass of the monomers M, and the monomers A and B making up at least 80 wt%, based on the total mass of the monomers M,
the monomers B being selected from

b1) vinyl esters of saturated $C_2$-$C_{12}$ monocarboxylic acids,
b2) primary amides of monoethylenically unsaturated $C_3$-$C_6$ monocarboxylic acids,
b3) N-vinyl lactams having 7 to 10 C atoms,
b4) vinyl-substituted nitrogen heteroaromatics,
b5) N-$C_1$-$C_4$ alkyl amides and N,N-di-$C_1$-$C_4$ alkyl amides of monoethylenically unsaturated $C_3$-$C_6$ monocarboxylic acids,
b6) N-vinyl amides of saturated $C_1$-$C_6$ monocarboxylic acids,

and mixtures thereof,
the water-soluble polymer P2 being coating comprised in an amount of 0.5 to 10 wt%, based on the polymer P1.

**2.** The aqueous, pigment-containing composition according to claim 1, the monomers B being selected from

b1) vinyl esters of saturated $C_2$-$C_{12}$ monocarboxylic acids,
b2) primary amides of monoethylenically unsaturated $C_3$-$C_6$ monocarboxylic acids,
b3) N-vinyl lactams having 7 to 10 C atoms,
b6) N-vinyl amides of saturated $C_1$-$C_6$ monocarboxylic acids,

and mixtures thereof.

3. The aqueous, pigment-containing coating composition according to claim 1 or 2, the polymer P2 being selected from:

- copolymers of N-vinylpyrrolidone with N-vinyl acetate,
- copolymers of N-vinylpyrrolidone with methacrylamide,
- terpolymers of N-vinylpyrrolidone with N-vinyl acetate and VeoVa®9,
- terpolymers of N-vinylpyrrolidone with methacrylamide and N-vinylcaprolactam,
- terpolymers of N-vinylpyrrolidone with methacrylamide and N-vinylimidazole,
- terpolymers of N-vinylpyrrolidone with methacrylamide and quaternized N-vinylimidazole,
- terpolymers of N-vinylpyrrolidone with N-vinylcaprolactam and N-vinylimidazole,
- quaterpolymers of N-vinylpyrrolidone with methacrylamide, N-vinylimidazole, and quaternized N-vinylimidazole,
- quaterpolymers of N-vinylpyrrolidone with N-vinylcaprolactam, N-vinylimidazole and quaternized N-vinylimidazole,

and mixtures thereof.

4. The aqueous, pigment-containing coating composition according to any of the preceding claims, comprising the water-soluble polymer P2 in an amount of 1 to 5 wt%, based on the polymer P1.

5. The aqueous, pigment-containing coating composition according to any of the preceding claims, the water-soluble polymer P2 having a number-average molecular weight $M_n$ of 5000 to 200 000 g/mol, determined by means of gel permeation chromatography (GPC), or a K value according to Fikentscher in the range from 10 to 100, determined by means of capillary viscosimetry on dilute aqueous solutions or determined according to DIN EN ISO 1628-1:2012.

6. The aqueous, pigment-containing coating composition according to any of the preceding claims, the polymer P1 having a glass transition temperature Tg, determined by DSC to ISO 11357-2, in the range from -30 to +60°C.

7. The aqueous, pigment-containing coating composition according to any of the preceding claims, the polymer P1 being composed of

i) 90 to 99.9 wt% of at least one monomer M1 which has a water-solubility of not more than 40 g/l at 20°C and 1 bar;
ii) 0.1 to 10 wt% of at least one monomer M2 which has a water-solubility of at least 50 g/l at 20°C and 1 bar.

8. The aqueous, pigment-containing coating composition according to any of the preceding claims, in the form of a formulation containing white pigment.

9. The use of a pigment-containing coating composition according to any of claims 1 to 8 for coating substrates containing tannin, more particularly wood surfaces.

10. The use of water-soluble polymers which are composed of ethylenically unsaturated monomers M and which comprise in copolymerized form at least 30 wt%, based on the monomers M, of N-vinylpyrrolidone for improving the tannin blocking effect of an aqueous coating compositions, the water-soluble polymer being selected from polymers P2 which comprise in copolymerized form

A) 30 to 90 wt% of N-vinylpyrrolidone as monomer A,
B) 10 to 70 wt% of at least one neutral, monoethylenically unsaturated monomer as monomer B, and optionally
C) 0 to 20 wt% of a cationic monomer as monomer C,

the figures in wt% being based on the total mass of the monomers M, and the monomers A and B making up at least 80 wt%, based on the total mass of the monomers M,
the water-soluble polymer P2 being comprised in an amount of 0.5 to 10 wt%, based on the polymer P1.

**11.** The use according to claim 10, the monomers B being selected from

> b1) vinyl esters of saturated $C_2$-$C_{12}$ monocarboxylic acids,
> b2) primary amides of monoethylenically unsaturated $C_3$-$C_6$ monocarboxylic acids,
> b3) N-vinyl lactams having 7 to 10 C atoms,
> b4) vinyl-substituted nitrogen heteroaromatics,
> b5) N-$C_1$-$C_4$ alkyl amides and N,N-di-$C_1$-$C_4$ alkyl amides of monoethylenically unsaturated $C_3$-$C_6$ monocarboxylic acids,
> b6) N-vinyl amides of saturated $C_1$-$C_6$ monocarboxylic acids,
> b7) $C_1$-$C_3$ alkyl acrylates and methyl methacrylate; and mixtures thereof.

**12.** The use according to claim 10, the polymer P2 being selected from

> - copolymers of N-vinylpyrrolidone with N-vinyl acetate,
> - copolymers of N-vinylpyrrolidone with methacrylamide,
> - terpolymers of N-vinylpyrrolidone with N-vinyl acetate and VeoVa®9,
> - terpolymers of N-vinylpyrrolidone with methacrylamide and N-vinylcaprolactam,
> - terpolymers of N-vinylpyrrolidone with methacrylamide and N-vinylimidazole,
> - terpolymers of N-vinylpyrrolidone with methacrylamide and quaternized N-vinylimidazole,
> - terpolymers of N-vinylpyrrolidone with N-vinylcaprolactam and N-vinylimidazole,
> - quaterpolymers of N-vinylpyrrolidone with methacrylamide, N-vinylimidazole, and quaternized N-vinylimidazole,
> - quaterpolymers of N-vinylpyrrolidone with N-vinylcaprolactam, N-vinylimidazole and quaternized N-vinylimidazole,

and mixtures thereof.

**13.** A method for coating a substrate containing tannin, wherein first the substrate is coated with an aqueous coating formulation according to any of claims 1 to 8 and subsequently the aqueous coating is subjected to a drying step.

**14.** The method according to claim 13, wherein the amount of coating formulation is selected such that the amount of water-soluble polymer is in the range from 0.001 to 100 g/m² of substrate.

**15.** A coated substrate containing tannin, obtainable by a method according to either of claims 13 and 14.

**Revendications**

**1.** Composition de revêtement aqueuse contenant des pigments, contenant :

> a) au moins un polymère P1 sous la forme d'une dispersion aqueuse de polymère, et
> b) au moins un polymère soluble dans l'eau P2, qui est formé par des monomères éthyléniquement insaturés M et qui contient sous forme copolymérisée au moins 30 % en poids, par rapport à la quantité totale des monomères M, de N-vinylpyrrolidone, le polymère soluble dans l'eau P2 étant choisi parmi les copolymères qui comprennent sous forme copolymérisée :
>
> > A) 30 à 90 % en poids de N-vinylpyrrolidone en tant que monomère A,
> > B) 10 à 70 % en poids d'au moins un monomère monoéthyléniquement insaturé neutre en tant que monomère B, et éventuellement
> > C) 0 à 20 % en poids d'un monomère cationique en tant que monomère C,
>
> les données en % en poids se rapportant à la masse totale des monomères M, et les monomères A et B représentant au moins 80 % en poids, par rapport à la masse totale des monomères M,
> les monomères B étant choisis parmi :
>
> > b1) les esters de vinyle d'acides monocarboxyliques en $C_2$-$C_{12}$ saturés,
> > b2) les amides primaires d'acides monocarboxyliques en $C_3$-$C_6$ monoéthyléniquement insaturés,
> > b3) les N-vinyllactames contenant 7 à 10 atomes C,

b4) les composés hétéroaromatiques azotés à substitution vinyle,
b5) les N-alkylamides en $C_1$-$C_4$ et les N,N-di-alkylamides en $C_1$-$C_4$ d'acides monocarboxyliques en $C_3$-$C_6$ monoéthyléniquement insaturés,
b6) les N-vinylamides d'acides monocarboxyliques en $C_1$-$C_6$ saturés,

et leurs mélanges,
le polymère soluble dans l'eau P2 étant contenu en une quantité de 0,5 à 10 % en poids, par rapport au polymère P1.

2. Composition de revêtement aqueuse contenant des pigments selon la revendication 1, dans laquelle les monomères B sont choisis parmi :

b1) les esters de vinyle d'acides monocarboxyliques en $C_2$-$C_{12}$ saturés,
b2) les amides primaires d'acides monocarboxyliques en $C_3$-$C_6$ monoéthyléniquement insaturés,
b3) les N-vinyllactames contenant 7 à 10 atomes C,
b6) les N-vinylamides d'acides monocarboxyliques en $C_1$-$C_6$ saturés,

et leurs mélanges.

3. Composition de revêtement aqueuse contenant des pigments selon la revendication 1 ou 2, dans laquelle le polymère P2 est choisi parmi :

- les copolymères de N-vinylpyrrolidone avec de l'acétate de N-vinyle,
- les copolymères de N-vinylpyrrolidone avec du méthacrylamide,
- les terpolymères de N-vinylpyrrolidone avec de l'acétate de N-vinyle et VeoVa®9,
- les terpolymères de N-vinylpyrrolidone avec du méthacrylamide et du N-vinylcaprolactame,
- les terpolymères de N-vinylpyrrolidone avec du méthacrylamide et du N-vinylimidazole,
- les terpolymères de N-vinylpyrrolidone avec du méthacrylamide et du N-vinylimidazole quaternisé,
- les terpolymères de N-vinylpyrrolidone avec du N-vinylcaprolactame et du N-vinylimidazole,
- les quaterpolymères de N-vinylpyrrolidone avec du méthacrylamide, du N-vinylimidazole et du N-vinylimidazole quaternisé,
- les quaterpolymères de N-vinylpyrrolidone avec du N-vinylcaprolactame, du N-vinylimidazole et du N-vinylimidazole quaternisé,

et leurs mélanges.

4. Composition de revêtement aqueuse contenant des pigments selon l'une quelconque des revendications précédentes, contenant le polymère soluble dans l'eau P2 en une quantité de 1 à 5 % en poids, par rapport au polymère P1.

5. Composition de revêtement aqueuse contenant des pigments selon l'une quelconque des revendications précédentes, dans laquelle le polymère soluble dans l'eau P2 présente un poids moléculaire moyen en nombre $M_n$ de 5 000 à 200 000 g/mol, déterminé par chromatographie par perméation de gel (CPG) ou une valeur K selon Fikentscher dans la plage allant de 10 à 100, déterminée par viscosimétrie capillaire de solutions aqueuses diluées ou déterminée selon DIN EN ISO 1628-1:2012.

6. Composition de revêtement aqueuse contenant des pigments selon l'une quelconque des revendications précédentes, dans laquelle le polymère P1 présente une température de transition vitreuse Tg, déterminée par DSC selon ISO 11357-2 dans la plage allant de -30 à +60 °C.

7. Composition de revêtement aqueuse contenant des pigments selon l'une quelconque des revendications précédentes, dans laquelle le polymère P1 est formé par :

i) 90 à 99,9 % en poids d'au moins un monomère M1, qui présente à 20 °C et 1 bar une solubilité dans l'eau d'au plus 40 g/l ;
ii) 0,1 à 10 % en poids d'au moins un monomère M2, qui présente à 20 °C et 1 bar une solubilité dans l'eau d'au moins 50 g/l.

8. Composition de revêtement aqueuse contenant des pigments selon l'une quelconque des revendications précédentes, sous la forme d'une formulation contenant un pigment blanc.

9. Utilisation d'une composition de revêtement contenant des pigments selon l'une quelconque des revendications 1 à 8 pour le revêtement de substrats contenant des tannins, notamment de surfaces en bois.

10. Utilisation de polymères solubles dans l'eau, qui sont formés par des monomères éthyléniquement insaturés M et qui contiennent sous forme copolymérisée au moins 30 % en poids, par rapport aux monomères M, de N-vinylpyrrolidone, pour améliorer l'effet de barrière contre les tannins de compositions de revêtement aqueuses, le polymère soluble dans l'eau étant choisi parmi les polymères P2, qui comprennent sous forme copolymérisée :

    A) 30 à 90 % en poids de N-vinylpyrrolidone en tant que monomère A,
    B) 10 à 70 % en poids d'au moins un monomère monoéthyléniquement insaturé neutre en tant que monomère B, et éventuellement
    C) 0 à 20 % en poids d'un monomère cationique en tant que monomère C,

les données en % en poids se rapportant à la masse totale des monomères M, et les monomères A et B représentant au moins 80 % en poids, par rapport à la masse totale des monomères M,
le polymère soluble dans l'eau P2 étant contenu en une quantité de 0,5 à 10 % en poids, par rapport au polymère P1.

11. Utilisation selon la revendication 10, dans laquelle les monomères B sont choisis parmi :

    b1) les esters de vinyle d'acides monocarboxyliques en $C_2$-$C_{12}$ saturés,
    b2) les amides primaires d'acides monocarboxyliques en $C_3$-$C_6$ monoéthyléniquement insaturés,
    b3) les N-vinyllactames contenant 7 à 10 atomes C,
    b4) les composés hétéroaromatiques azotés à substitution vinyle,
    b5) les N-alkylamides en $C_1$-$C_4$ et les N,N-di-alkylamides en $C_1$-$C_4$ d'acides monocarboxyliques en $C_3$-$C_6$ monoéthyléniquement insaturés,
    b6) les N-vinylamides d'acides monocarboxyliques en $C_1$-$C_6$ saturés,
    b7) les acrylates d'alkyle en $C_1$-$C_3$ et le méthacrylate de méthyle,

et leurs mélanges.

12. Utilisation selon la revendication 10, dans laquelle le polymère P2 est choisi parmi :

    - les copolymères de N-vinylpyrrolidone avec de l'acétate de N-vinyle,
    - les copolymères de N-vinylpyrrolidone avec du méthacrylamide,
    - les terpolymères de N-vinylpyrrolidone avec de l'acétate de N-vinyle et VeoVa®9,
    - les terpolymères de N-vinylpyrrolidone avec du méthacrylamide et du N-vinylcaprolactame,
    - les terpolymères de N-vinylpyrrolidone avec du méthacrylamide et du N-vinylimidazole,
    - les terpolymères de N-vinylpyrrolidone avec du méthacrylamide et du N-vinylimidazole quaternisé,
    - les terpolymères de N-vinylpyrrolidone avec du N-vinylcaprolactame et du N-vinylimidazole,
    - les quaterpolymères de N-vinylpyrrolidone avec du méthacrylamide, du N-vinylimidazole et du N-vinylimidazole quaternisé,
    - les quaterpolymères de N-vinylpyrrolidone avec du N-vinylcaprolactame, du N-vinylimidazole et du N-vinylimidazole quaternisé,

et leurs mélanges.

13. Procédé de revêtement d'un substrat contenant des tannins, **caractérisé en ce que** le substrat est tout d'abord revêtu avec une formulation de revêtement aqueuse selon l'une quelconque des revendications 1 8, puis le revêtement aqueux est soumis à une étape de séchage.

14. Procédé selon la revendication 13, **caractérisé en ce que** la quantité de formulation de revêtement est choisie de telle sorte que la quantité de polymère soluble dans l'eau se situe dans la plage allant de 0,001 à 100 g/m$^2$ de substrat.

15. Substrat contenant des tannins revêtu, pouvant être obtenu par un procédé selon l'une quelconque des revendications 13 ou 14.

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19908719 A
- DE 102011079112
- US 2003203991 A
- DE 19908719
- WO 2015107163 A
- DE 922378
- DE 963057
- EP 104042 A
- DE 19950229
- EP 418721 A
- WO 0129100 A
- WO 2003092640 A
- WO 2005123014 A

- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A

**In der Beschreibung aufgeführte Nicht-Patentliteratur**

- **FIKENTSCHER.** *Cellulosechemie,* 1932, vol. 13, 58-64
- Analysis of Polymer Dispersions with an Eight-Cell-AUC-Multiplexer: High Resolution Particle Size Distribution and Density Gradient Techniques. **S. E. HARDING et al.** Analytical Ultracentrifugation in Biochemistry and Polymer Science. Royal Society of Chemistry, 1992, 147-175
- **T. G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Encyclopedia of Industrial Chemistry. Verlag Chemie, 1992, vol. A21, 169
- **J. BRANDRUP ; E. H. IMMERGUT.** Polymer Handbook. J. Wiley, 1966
- POLYMER HANDBOOK. J. Wiley, 1975
- POLYMER HANDBOOK. J. Wiley, 1989
- Encyclopedia of Polymer Science and Engineering. John Wiley & Sons, Inc, 1987, vol. 8, 659-677
- **D. C. BLACKLEY.** Emulsion Polymerisation. Applied Science Publishers, Ltd, 1975, 155-465

- **D. C. BLACKLEY.** Polymer Latices. Chapman & Hall, 1997, vol. 1, 33-415
- **H. WARSON.** The Applications of Synthetic Resin Emulsions. Ernest Benn, Ltd, 1972, 49-244
- **J. PIIRMA.** Emulsion Polymerisation. Academic Press, 1982, 1-287
- **F. HÖLSCHER.** Dispersionen synthetischer Hochpolymerer. Springer-Verlag, 1969, 1-160
- Makromolekulare Stoffe. Houben-Weyl, Methoden der organischen Chemie. Georg Thieme Verlag, 1961, vol. XIV/1, 411-420
- Makromolekulare Stoffe. Houben-Weyl, Methoden der organischen Chemie. Georg Thieme Verlag, 1961, vol. 14/1, 192-208
- Makromolekulare Stoffe. Houben-Weyl, Methoden der organischen Chemie. Georg-Thieme-Verlag, 1961, vol. XIV/1, 192-208
- **AUTOREN M. SCHWARTZ ; R. BAUMSTARK.** *water-based acrylates for decorative coatings,* ISBN 3-87870-726-6
- *CHEMICAL ABSTRACTS,* 54423-67-5